# EUROPÄISCHE PATENTSCHRIFT

(11) **EP 0 466 949 B1**
(45) Veröffentlichungstag und Bekanntmachung des Hinweises auf die Patenterteilung: **20.03.1996**
(21) Anmeldenummer: 90113587.1
(22) Anmeldetag: 16.07.1990
(51) Int. Cl.: G06K 7/08, H04B 5/00

(54) **Einrichtung zur berührungslosen Daten- und Energieübertragung sowie Verwendung einer solchen**
Device for contactless transfer of data and energy and its use
Dispositif de transfert sans contact de données et d'énergie et son usage

(43) Veröffentlichungstag der Anmeldung: 22.01.1992
(73) Patentinhaber: SIEMENS AKTIENGESELLSCHAFT, D-80333 München (DE)
(72) Erfinder: Irmer, Heimbert Ulrich, D-8013 Haar (DE); Scheckel, Bruno, D-8017 Ebersberg (DE)

(56) Entgegenhaltungen:
- EP-A- 0 309 201
- DE-C- 3 447 560
- PATENT ABSTRACTS OF JAPAN vol. 12, no. 192 (P-712)(3039) 04 Juni 1988, & JP-A- 62 297988 (OKI ELECTRIC) 25 Dezember 1987,

## Beschreibung

Die Erfindung betrifft eine Einrichtung zur berührungslosen Daten- und Energieübertragung sowie deren Verwendung.

Eine solche Einrichtung ist in der DE-C2-34 47 560, insbesondere Figur 1 und Figur 2 und der zugehörigen Beschreibung beschrieben. Außerdem ist eine solche Einrichtung aus dem Laboratory Report Nr. HTV 8902/HDP 8902, "C2-Card" von Rainer Imjela von Philips Components, datiert am 11.10.1989, veröffentlicht als Laborbericht C2-Card im Januar 1990 von Valvo/Philips Bauelemente, insbesondere Figur 4 auf Seite 27 bekannt. Teilschaltungen gattungsgemäßer Einrichtungen sind in der DE-C1-31 49 789, in der DE-C2-32 21 956, in der DE-C2-32 25 039, in der DE-C2-36 14 477 und in der DE-A1-38 10 702 beschrieben.

Die DE-C2-34 47 560 beschreibt eine Einrichtung zur berührungslosen Daten- und Energieübertragung, bestehend aus einem stationären Teil, der Mikrostation genannt wird mit einem Oszillator zur kontaktlosen Leistungsübertragung mit Hilfe von mindestens einem Spulenpaar, üblicherweise jedoch zweier Spulenpaare an einen beweglichen Teil, der Mikroeinheit genannt wird. In der beschriebenen Einrichtung sind im stationären Teil zwei Spulen vorgesehen, die mit zwei Spulen im beweglichen Teil insgesamt zwei Spulenpaare bilden. Die Datenübertragung vom beweglichen Teil zum stationären Teil erfolgt durch gleichzeitige Belastungsänderung an den beiden Spulen des beweglichen Teiles, wodurch gewährleistet ist, daß an einer der beiden Spulen des stationären Teiles auch bei vertauschter Zuordnung der Spulenpaare ein Nachweis der Belastungsänderung möglich ist. Die Schwingung des Oszillators im stationären Teil wird in zwei getrennte Schwingungen (eine Bezugsschwingung und eine Informationsschwingung) aufgespalten, wobei der einen Schwingung (Informationsschwingung) in Abhängigkeit von den zu übertragenden Daten eine Phasenverschiebung gegenüber der anderen, als Bezugsgröße dienenden Bezugsschwingung aufgezwungen wird. Diese phasenverschobene Schwingung wird über eines der Spulenpaare, die andere Schwingung über das andere Spulenpaar dem beweglichen Teil zugeführt. Die Leistungsübertragung erfolgt mit Hilfe der beiden Schwingungen über beide Spulenpaare. In dem beweglichen Teil werden die übertragenen Schwingungen einem Demodulator in Form eines Phasenvergleichers zugeführt, der aus der Phasenverschiebung die Daten wieder gewinnt.

Die in der DE-C2-34 47 560 beschriebene stationäre Einheit enthält einen Oszillator, dessen Ausgangsfrequenz jeweils über ein Flipflop mit unterschiedlicher Flankensteuerung an zwei Ausgängen bereitgestellt wird, so daß zwei Signale der gleichen Frequenz bereitgestellt werden, die um 90° phasenverschoben sind. Diese beiden Signale sind jeweils an eine Spule geschaltet, wobei jede dieser Spulen im stationären Teil mit einer Spule im beweglichen Teil ein Spulenpaar bildet. Die Phasenlage des an einer dieser Spulen anliegenden Signales ist hierbei um 180° verschiebbar. Dadurch ist die Phasenlage zwischen den beiden in den beiden Spulenpaaren übertragenen Signalen um ± 90° umschaltbar. Die Signalübertragung vom stationären Teil zum beweglichen Teil kann somit mit Hilfe von 2 PSK (Phase Shift Keying mit zwei möglichen Phasenzuständen) erfolgen.

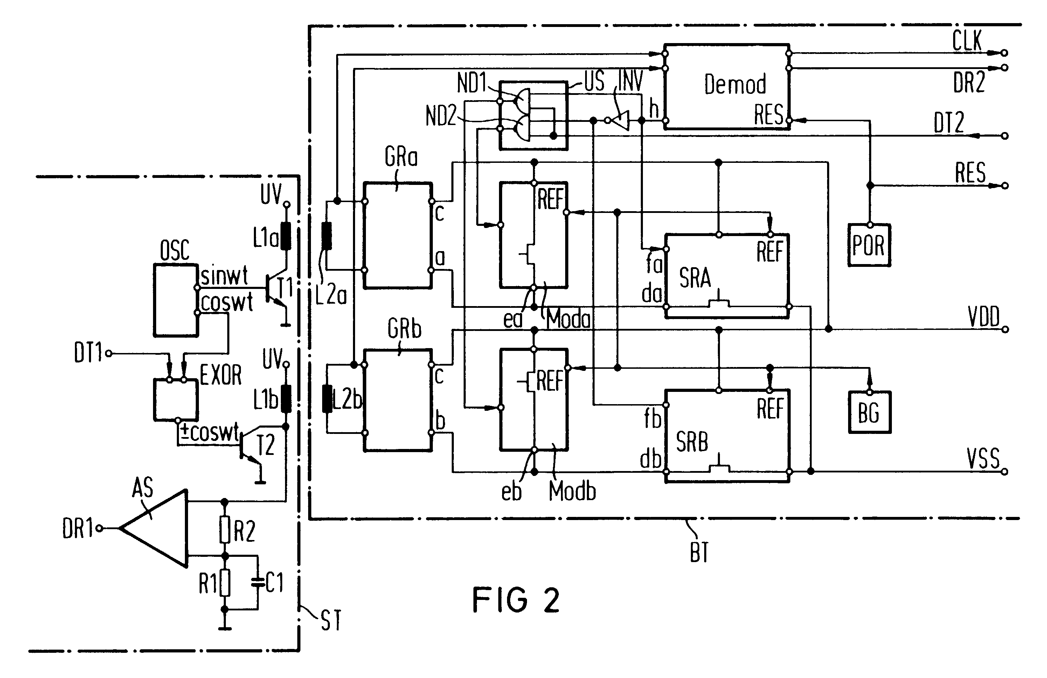

Der in Figur 2 der DE-C2-34 47 560 in Form eines Blockschaltbildes dargestellte bewegliche Teil der Einrichtung zur berührungslosen Daten- und Energieübertragung ist im wesentlichen identisch mit dem auf Seite 27 des obengenannten Laborberichtes C2-Card gezeigten Funktionsblockschaltbild des beweglichen Teiles einer Einrichtung zur berührungslosen Daten- und Energieübertragung. An jeweils einer Anschlußklemme der beiden im beweglichen Teil vorhandenen Spulen wird das Signal abgegriffen und an je einen Eingang einer Demodulatorschaltung geschaltet. Diese Demodulatorschaltung gibt das von der stationären Einheit gesendete Signal an nachgeordnete Schaltungseinheiten weiter. Der Demodulatorschaltung ist eine Schaltungseinheit nachgeschaltet, die zum Einschaltzeitpunkt des beweglichen Teiles den Logikpegel des Signales festlegt. Bei jedem Einschalten des beweglichen Teiles wird hierzu ein vorher festgelegter Pegel, entweder High oder Low, über eine bestimmte Zeitdauer gesendet. Mit Einschalten des beweglichen Teiles wird dieser zur Pegel-festlegung benötigte Schaltungsteil zurückgesetzt und legt dann in Abhängigkeit vom vordefinierten gesendeten Signal den Logikpegel des beweglichen Teiles fest. Den beiden Anschlußklemmen beider, im beweglichen Teil enthaltenen Spulen ist jeweils ein Gleichrichter nachgeschaltet. Der die positive Spannung bereitstellende Ausgang des einen dieser Gleichrichter ist hierbei mit dem die positive Spannung bereitstellenden Ausgang des anderen dieser Gleichrichter zusammengeschaltet und auch die beiden jeweils die negative Spannung bereitstellenden Ausgangsklemmen der beiden Gleichrichter sind miteinander verbunden. Der gemeinsame Ausgang der beiden Gleichrichterschaltungen ist sowohl an eine variable Last, als auch an einen Spannungsregler zur Bereitstellung der Betriebsspannung des beweglichen Teiles angeschlossen. Die variable Last ist hierbei derart angesteuert, daß sie vornehmlich den Realteil der Eingangsimpedanz des beweglichen Teiles der Einrichtung zur berührungslosen Datenund Energieübertragung in Abhängigkeit von den von dem beweglichen Teil an den stationären Teil zu übertragenden Daten verändert. Als variable Last kann hierbei unter anderem ein Synchronschalter vorgesehen sein, der in Abhängigkeit von den zu übertragenden Daten offen oder geschlossen ist und somit der im offenen Zustand dieses Schalters vorliegenden Eingangsimpedanz des beweglichen Teiles eine weitere Impedanz parallelschalten kann. Diese variable Last wirkt bei entsprechender Ansteuerung als Amplitudenmodulator.

Wenn die Informationsschwingung zwischen +90° und -90° Phasenverschiebung umgeschaltet wird, geht im Umschaltzeitpunkt die Schwingamplitude an der mit der Informationsschwingung beaufschlagten Spule des stationären Teiles für eine bestimmte Zeitdauer gegen Null. Die Energieversorgung des beweglichen Teiles muß für diese Zeitspanne von einem Spulenpaar alleine übernommen werden. Wenn die Spulen des beweglichen Teiles beliebig mit den Spulen des stationären Teiles Spulenpaare zur berührungslosen Daten- und Energieübertragung bilden können, müssen zumindest die die Bezugsschwingung übertragende Spule des stationären Teiles sowie beide Spulen des beweglichen Teiles und auch beide Gleichrichteranordnungen des beweglichen Teiles in ihrer Leistungsfestigkeit so bemessen sein, daß sie zur Bereitstellung der gesamten vom beweglichen Teil benötigten Energie geeignet sind.

Der den beiden mit ihren Ausgängen parallelgeschalteten Gleichrichterschaltungen nachgeschaltete Spannungsregler, beispielsweise ein Serienregler, muß eine Grenzfrequenz aufweisen, die höher ist, als die Datenübertragungsrate des Amplitudenmodulators. Nur so können die vom Amplitudenmodulator eingeprägten Potentialsprünge am Eingang dieses Spannungsreglers ausgeregelt werden. Es ist deshalb empfehlenswert, daß der Spannungsregler, der die Energieversorgung des beweglichen Teiles aufrechterhält, eine Grenzfrequenz aufweist, die in der Größenordnung der Signalfrequenz des im stationären Teil befindlichen Oszillators liegt, wenn die Amplitudenmodulation der durch den Oszillator festgelegten Trägerfrequenz ein sicher erkennbares Rechtecksignal überlagern soll. Durch die Grenzfrequenz des Spannungsreglers wird somit bei solchen Schaltungsanordnungen die Datenübertragungsrate vom beweglichen Teil zum stationären Teil festgelegt. Bei hohen Datenübertragungsraten ist der Spannungsregler entsprechend aufwendig zu realisieren.

Bei vorgegebener Übertragungscharakteristik für die Signalübertragung vom beweglichen Teil zum stationären Teil, beispielsweise ein Amplitudenhub im beweglichen Teil von 4 V, der einem geforderten Belastungshub im stationären Teil entspricht, wird eine um den Betrag des Amplitudenhubes erhöhte minimal zulässige Eingangsspannung des Spannungsreglers im beweglichen Teil benötigt, um eine geforderte Ausgangsspannung bereitzustellen. Bei bekannten Einrichtungen zur berührungslosen Daten- und Energieübertragung muß der minimal zulässige Wert der von den Spulen am Eingang des beweglichen Teiles bereitgestellten Spannung um die über den Brückengleichrichter abfallende Spannung, um die minimale über den Spannungsregler abfallende Spannung und um den Amplitudenhub höher sein als die benötigte Ausgangsspannung des Spannungsreglers. Um beispielsweise bei einem Amplitudenhub von 4 V eine Ausgangsspannung von 5 V am Spannungsregler zu erhalten, muß die Eingangsspannung üblicherweise größer als 11 V sein. Bei monolithisch integrierten Schaltkreisen muß also ein integrierter Schaltkreis, der mit einer Betriebsspannung von 5 V versorgt wird auch Bauelemente mit einer Durchbruchsspannung von über 11 V enthalten.

Auch die EP 0 309 201 A2 zeigt eine Einrichtung zur berührungslosen Daten- und Energieübertragung mit zwei Spulenpaaren, wobei Energie nur über ein Spulenpaar und Daten vom beweglichen zum stationären Teil nur über das andere Spulenpaar übertragen werden. Hierbei ist jedoch die Zuordnung der Spulen des beweglichen Teils zu denen des stationären Teils fest vorgegeben, so daß der Ausgang des Gleichrichters der Energie empfangenden Spule und damit der Eingang eines eventuell vorhandenen Spannungsreglers nicht mit dem Ausgang des Amplitudenmodulators im beweglichen Teil verbunden ist.

Aufgabe der Erfindung ist das Bereitstellen einer Einrichtung zur berührungslosen Daten- und Energieübertragung der eingangs genannten Art, die auch für höhere Datenübertragungsraten geeignet ist und bei der zur Bereitstellung einer bestimmten Betriebsspannung des beweglichen Teiles dieser bewegliche Teil eine nicht so hohe Eingangsspannung wie in bekannten Einrichtungen benötigt.

Diese Aufgabe wird gelöst durch einen Gegenstand mit den Merkmalen des Patentanspruches 1.

Günstige Ausgestaltungsformen sind Gegenstand von Unteransprüchen.

Eine erfindungsgemäße Einrichtung zur berührungslosen Daten-und Energieübertragung unterscheidet sich von einer obenbeschriebenen, bekannten Einrichtung in erster Linie dadurch, daß die Leistungsübertragung nur mit Hilfe eines Spulenpaares erfolgt und daß die Datenübertragung von dem beweglichen Teil zum stationären Teil nur durch Belastungsänderung an der Spule des beweglichen Teiles erfolgt, die nicht der Leistungsübertragung dient. Dadurch ist sichergestellt, daß nicht unmittelbar am Eingang des Spannungsreglers zur Bereitstellung der Betriebs-spannung des beweglichen Teiles eine Amplitudenmodulation vorgenommen wird, die von diesem Spannungsregler ausgeregelt werden müßte. Die Datenübertragungsrate wird also nicht durch die Grenzfrequenz des Spannungsreglers des beweglichen Teiles begrenzt. Um sicherzustellen, daß ein kurzzeitiger Ausfall der Informationsschwingung bei jedem Umschalten der Phase zu Leistungsausfällen im beweglichen Teil führt, sollte bei erfindungsgemäßen Einrichtungen zur berührungslosen Daten- und Energieübertragung die Leistungsübertragung mit Hilfe der Schwingung des Spulenpaares erfolgen, das die Bezugsschwingung überträgt.

Um in einer Ausgestaltungsform der Erfindung sicherzustellen, daß die Spulen des stationären Teiles den Spulen des beweglichen Teiles zur Bildung von Spulenpaaren beliebig zuordenbar sind und somit, wenn auch nicht gleichzeitig, über jede der beiden Spulen Energie oder Daten übertragen werden können, ist erfindungsgemäß jeder der beiden Spulen des beweglichen Teiles außer einer Gleichrichterschaltung zumindest jeweils das Stellglied eines Spannungsreglers zugeordnet und außerdem zumindest jeweils ein Schalter zugeordnet, der in Abhängigkeit von seiner Ansteuerung und der dadurch bewirkten Schalterstellung die Belastung des ihm zugeordneten Spulenpaares verändern kann. Es kann auch jeder der Spulen ein Spannungsregler und eine veränderbare Last zugeordnet sein oder es kann nur ein Spannungsregler und auch nur eine veränderbare Last vorgesehen sein, die wahlweise durch Umschalten den Spulen des beweglichen Teiles nachschaltbar sind. In allen dieser Fälle muß durch eine logische Verknüpfung sichergestellt sein, daß der für die Datenübertragung vom beweglichen Teil zum stationären Teil benötigte Amplitudenmodulator immer die Belastung des Spulenpaares ändert, das keinen Anteil an der Energieübertragung hat, dessen Spannungsregler bzw. Spannungsreglerstellglied folglich nicht aktiviert ist, bzw. dem der Spannungsregler nicht nachgeschaltet ist.

Wenn die Spulen des beweglichen Teiles und die Spulen des stationären Teiles beliebig koppelbar sein sollen und deshalb eine obenbeschriebene Demodulatorschaltung mit einer Schaltungseinheit zum Festlegen des Logikpegel des Signales vorgesehen ist, so kann diese Schaltungseinheit in der gleichen Weise, in der sie den Logikpegel festlegt, auch erkennen, an welcher der Spulen des beweglichen Teiles die Bezugsschwingung und an welcher der Spulen des beweglichen Teiles die in ihrer Phasenlage zur Bezugsschwingung veränderliche Informationsschwingung übertragen werden. Erfindungsgemäß wird bei einer solchen Einrichtung zur berührungslosen Daten- und Energieübertragung in Abhängigkeit von einem diese Information enthaltenden Signal der Demodulatorschaltung durch eine logische Verknüpfung festgelegt, welche Spule des beweglichen Teiles für die Datenübertragung vom beweglichen Teil zum stationären Teil eingesetzt wird und welche Spule für die Energieübertragung vorgesehen ist, wobei sichergestellt ist, daß die Datenübertragung vom beweglichen Teil zum stationären Teil mit Hilfe der Spule des beweglichen Teiles erfolgt, die momentan nicht zur Energieübertragung eingesetzt ist. Um eine kontinuierliche Energieversorgung des beweglichen Teiles sicherzustellen wird hierbei der die Bezugsschwingung übertragenden Spule ein Spannungsregler nachgeschaltet bzw. ein dieser Spule nachgeschalteter Spannungsregler aktiviert und an der die Informationsschwingung übertragenden Spule des beweglichen Teiles wird für die Datenübertragung vom beweglichen Teil zum stationären Teil die Belastung in Abhängigkeit der zu übertragenden Daten variiert.

Nachfolgend wird die Erfindung anhand der in den Figuren gezeigten Ausführungsbeispiele näher erläutert.

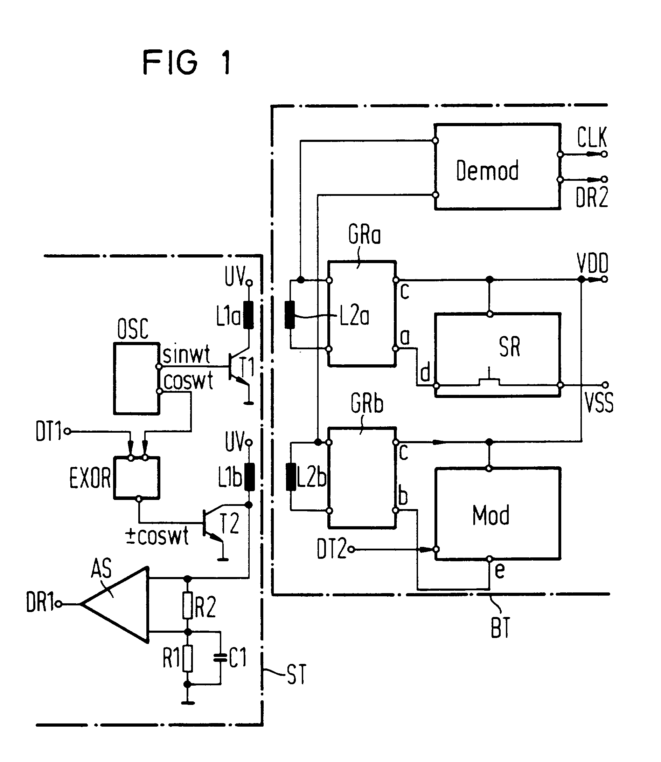

Es zeigt Figur 1 das Prinzipschaltbild einer Ausführungsform einer erfindungsgemäßen Einrichtung zur berührungslosen Daten und Energieübertragung, bestehend aus einem stationären Teil ST und einem beweglichen Teil BT, wobei der stationäre Teil zwei Übertragerspulen L1a und L1b aufweist und auch der bewegliche Teil zwei Übertragerspulen L2a und L2b aufweist und wobei die Übertragerspulen des stationären Teiles zur Bildung von Spulenpaaren den Übertragerspulen des beweglichen Teiles fest zugeordnet sind.

Figur 2 zeigt das Prinzipschaltbild einer Ausführungsform einer erfindungsgemäßen Einrichtung zur berührungslosen Daten- und Energieübertragung, bestehend aus einem stationären Teil ST und einem beweglichen Teil BT, wobei der stationäre Teil zwei Übertragerspulen L1a und L1b aufweist und der bewegliche Teil BT ebenfalls zwei Übertragerspulen L2a und L2b aufweist und wobei die Übertragerspulen des beweglichen Teiles L2a und L2b den Übertragerspulen des stationären Teils L1a und L1b beliebig zur Bildung von Spulenpaaren zuordenbar sind.

Figur 1 zeigt einen stationären Teil ST, mit einer Übertragerspule L1a, die mit einem Anschluß an ein Versorgungspotential UV geschaltet ist und deren zweiter Anschluß über einen Schalter, insbesondere einen Transistor T1 an ein zweites Versorgungspotential, insbesondere an Masse schaltbar ist. Der Schalter T1 wird hierbei von der Ausgangsklemme sinwt eines Oszillators OSC angesteuert. Der Oszillator OSC weist außer dem Ausgang sinwt noch einen zweiten Ausgang coswt auf, wobei das am Ausgang coswt bereitgestellte Signal gegenüber dem am Ausgang sinwt bereitgestellten Signal eine fest vorgegebene Phasenbeziehung, beispielsweise eine Phasenlage von 90° aufweist. Der Ausgang coswt des Oszillators OSC ist an den Eingang eines Exklusiv-ODER-Gatters EXOR geschaltet. Der andere Eingang dieses Exklusiv-ODER-Gatters EXOR ist über eine Dateneingangsklemme DT1 mit Binärdaten beaufschlagbar. Steht an der Dateneingangsklemme DT1 ein Low-Pegel an, so entspricht das Signal am Ausgang ±coswt des Exklusiv-ODER-Gatters EXOR dem Signal am Ausgang coswt des Oszillators OSC. Steht an der Dateneingangsklemme DT1 ein High-Pegel an, so entspricht das am Ausgang ±coswt des Exklusiv-ODER-Gatters EXOR bereitgestellte Signal dem um 180° phasenverschobenen Signal am Ausgang coswt des Oszillators OSC. Das dargestellte Exklusiv-ODER-Glatter EXOR dient somit in dem Ausführungsbeispiel nach Figur 1 als besondere Ausführungsform eines Phasenmodulators. Das Ausgangssignal des Exklusiv-ODER-Gatters EXOR steuert einen Schalter, insbesondere einen Transistor T2, der einen Anschluß einer Übertragerspule L1b gegen das zweite Bezugspotential, insbesondere Masse schalten kann. Der andere Anschluß dieser Übertragerspule L1b ist mit einem Versorgungspotential UV beaufschlagt. Der über den Schalter T2 an das Bezugspotential Masse schaltbare Anschluß der Übertragerspule L1b ist außerdem mit einem Eingang einer Auswertestufe AS zusammengeschaltet und über einen Widerstand R2 an einen zweiten Eingang dieser Auswertestufe AS geschaltet. Der zweite Eingang dieser Auswertestufe AS ist außerdem über die Parallelschaltung eines Widerstandes R1 und einer Kapazität C1 an das Bezugspotential Masse geschaltet. Der Ausgang der Auswertestufe AS bildet eine Datenausgangsklemme DR1.

Außerdem zeigt Figur 1 einen beweglichen Teil ST mit zwei Übertragerspulen L2a, L2b, denen jeweils eine Gleichrichterschaltung GRa, GRb nachgeschaltet ist, mit einem Demodulator Demod, mit einem Spannungsregler SR und mit einem Modulator bzw. einem Modulatorstellglied Mod. Der Demodulator Demod, der üblicherweise einen Phasendetektor und evtl. eine Schaltung zur Festlegung des Logikpegels enthält, weist zwei Eingänge auf. Einer dieser Eingänge ist mit einem Anschluß der Übertragerspule L2a verbunden, der andere Eingang des Demodulator Demod ist mit einem Anschluß der anderen Übertragerspule L2b zusammengeschaltet. Die Demodulatorschaltung Demod weist eine Ausgangsklemme CLK auf, die in Abhängigkeit von dem von den Übertragerspulen empfangenen Signal ein Taktsignal für den beweglichen Teil der Übertragungseinrichtung nachgeschaltete Schaltungsteile wie z.B. Logikschaltungen oder einen Prozessor bereitstellt. Außerdem weist die Demodulatorschaltung Demod einen Ausgang DR2 auf, an dem die Daten demoduliert bereitgestellt werden, die über die Dateneingangsklemme DT1 im stationären Teil ST eingespeist und von dem durch das Exclusiv-Oder-Gatter EXOR gebildeten Phasenmodulator der von dem Oszillator OSC bereitgestellten Tragerfrequenz aufmoduliert wurden. Jede der beiden Anschlußklemmen der Übertragerspule L2a ist jeweils mit einem Wechselstromeingang der Gleichrichterschaltung GRa verbunden. Jede der beiden Anschlußklemmen der Übertragerspule L2b ist mit jeweils einem Wechselstromeingang des Gleichrichters GRb verbunden. Die Gleichrichterschaltungen GRa und GRb weisen jeweils eine Ausgangsklemme c auf, wobei diese beiden Ausgangsklemmen c zusammengeschaltet sind und das Bezugspotential VDD für die im beweglichen Teil enthaltenen elektronischen Schaltkreise, wie auch den Spannungsregler SR und Modulator Mod bereitstellen. Eine Ausgangsklemme a der Gleichrichterschaltung GRa ist mit einer Eingangsklemme d des Spannungsregler SR zusammengeschaltet. Die Ausgangsklemme des Spannungsreglers SR stellt das Versorgungspotential VSS für die elektronischen Schaltkreise des beweglichen Teiles BT bereit. Ist der Spannungsregler SR ein Negativspannungsregler, so ist das Bezugspotential VDD größer als das Versorgungspotential VSS. Wenn der Spannungsregler SR ein Positivspannungsregler ist, so ist das Versorgungspotential VSS größer als das Bezugspotential VDD. In Abhängigkeit hiervon sind die Ausgangsklemmen a, b und c der Gleichrichteranordnungen GRa und GRb durch geeigneten Wicklungssinn zu definieren. Eine Ausgangsklemme b der Gleichrichterschaltung GRb ist mit einer Eingangsklemme e der Modulatorschaltung Mod zusammengeschaltet. Wie in der Figur dargestellt, ist hierbei die Eingangsklemme e der Modulatorschaltung an eine veränderliche Last angekoppelt, die vornehmlich den Realteil der zwischen den Ausgangsklemmen b und c der Gleichrichteranordnung GRb wirksamen Impedanz in Abhängigkeit von ihrer Ansteuerung verändern kann. Die Modulatorschaltung Mod ist über eine Dateneingangsklemme DT2 mit Binärdaten ansteuerbar.

Bei einer Einrichtung nach Figur 1 ist sichergestellt, daß die Energieübertragung vom stationären Teil ST zum beweglichen Teil BT über das von den Spulen L1a und L2a gebildete Spulenpaar erfolgt und daß die Übertragung von Daten, die auf den beweglichen Teil BT in die Dateneingangsklemme DT2 eingespeist werden über das von den Übertragerspulen L1b und L2b gebildete Spulenpaar zum stationären Teil ST übertragen werden und von der Auswerteschaltung AS ausgewertet an der Datenausgangsklemme DR1 bereitgestellt werden. Dadurch ist die von der Gleichrichterschaltung GRa an den Ausgangsklemmen a und c bereitgestellte Spannung nicht amplitudenmoduliert, so daß der Spannungsregler SR nur stationäre oder langsam sich ändernde Spannungsschwankungen ausregeln muß. Als Spannungsregler SR können irgendwelche geeigneten Spannungsregler, beispielsweise Serienregler eingesetzt werden. Als Gleichrichterschaltung GRa bzw. GRb können Halbwellen- oder Vollwellengleichrichter, ggf. mit einem Puffer-Kondensator am Ausgang, vorgesehen sein. Der Übertrager, gebildet aus den Spulen L1b und L2b kann gegenüber dem aus den Spulen L1a und L2a gebildeten Übertrager weniger aufwendig realisiert sein, weil keine Leistung übertragen wird. Auch die Gleichrichterschaltung GRb kann gegenüber der Gleichrichterschaltung GRa sowohl in der Dimensionierung der Bauelemente, als auch in der Komplexität der Schaltung weniger aufwendig konstruiert sein.

Figur 2 zeigt den gleichen stationären Teil ST wie Figur 1. Außerdem zeigt Figur 2 einen beweglichen Teil BT mit zwei Übertragerspulen L2a, L2b, denen jeweils eine Gleichrichterschaltung GRa, GRb nachgeschaltet ist, mit einem Demodulator Demod, mit zwei Spannungsreglern bzw. Stellgliedern eines Spannungs reglers SRA, SRB, mit zwei Modulatoren bzw. Modulatorstellgliedern Moda, Modb, mit einer Power-On-Reset-Schaltung POR und mit einer Referenzspannungserzeugung, beispielsweise einer Band-Gap-Schaltung BG. Der Demodulator Demod, der üblicherweise einen Phasendetektor und eine Schaltung zur Festlegung des Logikpegels enthält, weist zwei Eingänge auf. Einer dieser Eingänge ist mit einem Anschluß der Übertragerspule L2a verbunden, der andere Eingang des Demodulator Demod ist mit einem Anschluß der anderen Übertragerspule L2b zusammengeschaltet. Die Demodulatorschaltung Demod weist eine Ausgangsklemme CLK auf, die in Abhängigkeit von dem von den Übertragerspulen empfangenen Signal ein Taktsignal für den beweglichen Teil der Übertragungseinrichtung nachgeschaltete Schaltungsteile wie z.B. Logikschaltungen oder einen Prozessor bereitstellt. Außerdem weist die Demodulatorschaltung Demod einen Ausgang DR2 auf, an dem die Daten demoduliert bereitgestellt werden, die über die Dateneingangsklemme DT1 im stationären Teil ST eingespeist und von dem durch das Exclusiv-Oder-Gatter EXOR gebildeten Phasenmodulator der von dem Oszillator OSC bereitgestellten Trägerfrequenz aufmoduliert wurden. Ein Reseteingang RES des Demodulators Demod ist mit dem Ausgang der Power-On-Reset-Schaltung POR verbunden. Bei jedem Einschalten der Versorgungsspannung des beweglichen Teiles BT wird über diese Verbindung eine Pegelfestlegungsschaltung des Demodulators rückgesetzt und der Logikpegel des durch den beweglichen Teil empfangenen Signales in der Demodulatorschaltung Demod festgelegt. Dies geschieht in Abhängigkeit davon, ob die Übertragerspulen L1a mit L2a und L1b mit L2b jeweils einen Übertrager bilden oder ob die Übertragerspulen Lla mit L2b und L1b mit L2a einen Übertrager bilden. Die Pegelfestlegungsschaltung in der Demodulatorschaltung Demod erkennt, welche Übertragerspule des beweglichen Teiles BT die Bezugsschwingung und welche die Informationsschwingung empfängt. In Abhängigkeit hiervon wird an einer Ausgangsklemme h der Demodulatorschaltung Demod ein Logikpegel bereitgestellt. Jede der beiden Anschlußklemmen der Übertragerspule L2a ist jeweils mit einem Wechselstromeingang der Gleichrichterschaltung GRa verbunden. Jede der beiden Anschlußklemmen der Übertragerspule L2b ist mit jeweils einem Wechselstromeingang des Gleichrichters GRb verbunden. Die Gleichrichterschaltungen GRa und GRb weisen jeweils eine Ausgangsklemme c auf, wobei diese beiden Ausgangsklemmen c zusammengeschaltet sind und das Bezugspotential VDD für die im beweglichen Teil enthaltenen elektronischen Schaltkreise, wie z.B. die Spannungsregler SRA und SRB, die Modulatoren bzw. Modulatorstellglieder Moda, Modb, die Power-On-Reset-Schaltung POR sowie die Referenzspannungserzeugung BG bereitstellen.

Eine Ausgangsklemme a der Gleichrichterschaltung GRa ist mit einer Eingangsklemme da des Spannungsreglers bzw. Spannungsreglerstellgliedes SRA und außerdem mit einer Eingangsklemme ea der Modulatorschaltung bzw. des Modulatorstellgliedes Moda zusammengeschaltet. Eine Ausgangsklemme b der Gleichrichterschaltung GRb ist mit einer Eingangsklemme db des Spannungsreglers bzw. Spannungsregierstellgliedes SRB und außerdem mit einer Eingangsklemme eb der Modulatorschaltung bzw. des Modulatorstellgliedes Modb zusammengeschaltet. Die Ausgangsklemme des Spannungsreglers bzw. Spannungsreglersrellgliedes SRA oder die Ausgangsklemme des Spannungsreglers bzw. Spannungsreglerstellgliedes SRB stellen das Versorgungspotential VSS für die elektronischen Schaltkreise des beweglichen Teiles BT bereit. Sind die Spannungsregler SRA, SRB Negativspannungsregler, so ist das Bezugspotential VDD größer als das Versorgungspotential VSS. Wenn die Spannungsregler SRA, SRB Positivspannungsregler sind, so ist das Versorgungspotential VSS größer als das Bezugspotential VDD. In Abhängigkeit hiervon sind die Ausgangsklemmen a, b und c der Gleichrichteranordnungen GRa und GRb durch geeigneten Wicklungssinn zu definieren. Wie in der Figur dargestellt, sind hierbei Eingangsklemmen ea und eb der Modulatorschaltungen Moda, Modb jeweils an eine veränderliche Last angekoppelt, die vornehmlich den Realteil der zwischen den Ausgangsklemmen a und c der Gleichrichteranordnung GRa bzw. den Ausgangsklemmen b und c der Gleichrichteranordnung GRb wirksamen Impedanz in Abhängigkeit von ihrer Ansteuerung verändern kann. Die Modulatorschaltungen bzw. Modulatorstellglieder Moda und Modb sind über eine Umschalteeinrichtung US mit Binärdaten ansteuerbar.

Ein Signaleingang der Umschalteeinrichtung US wird über eine Dateneingangsklemme DT2 mit den Binärdaten beaufschlagt, die vom beweglichen Teil BT zum stationären Teil ST übertragen werden sollen. Die an der Dateneingangsklemme DT2 eingespeisten Binärdaten werden in Abhängigkeit von dem Signal, das die Demodulatorschaltung Demod an ihrer Ausgangsklemme h bereitstellt entweder an den Steuereingang der Modulatorschaltung Moda oder an den Steuereingang der Modulatorschaltung Modb geschaltet. Hierzu ist die Ausgangsklemme h der Demodulatorschaltung Demod an einen Eingang der Umschalteeinrichtung US geschaltet und außerdem an den Eingang einer Invertiererschaltung INV. Der Ausgang dieser Invertiererschaltung INV ist an einen weiteren Eingang der Umschalteeinrichtung US geschaltet. In Figur 2 wird eine mögliche Ausführungsform einer Umschalteeinrichtung US durch zwei NAND-Gatter ND1 und ND2 dargestellt. Der Signalausgang eines dieser NAND-Gatter ND1 bildet einen Ausgang der Umschalteeinrichtung US und ist an den Steuereingang der Modulatorschaltung bzw. des Modulatorstellgliedes Modb geschaltet. Der Signalausgang des NAND-Gatters ND2 bildet einen zweiten Signalausgang der Umschalteeinrichtung US und ist an den Steuereingang der Modulatorschaltung bzw. des Modulatorstellgliedes Moda geschaltet. Die beiden NAND-Gatter ND1 und ND2 sind jeweils mit zwei Eingängen ausgeführt, wobei je ein Eingang der beiden NAND-Gatter ND1 und ND2 mit der Dateneingangsklemme DT2 zusammengeschaltet sind. Der zweite Eingang des NAND-Gatters ND1 ist mit der Ausgangsklemme h der Demodulatorschaltung Demod verbunden, der zweite Eingang des weiteren NAND-Gatters ND2 ist mit dem Ausgang der Invertiererschaltung INV zusammengeschaltet.

Durch diese Schaltungsart ist sichergestellt, daß in Abhängigkeit von dem an der Ausgangsklemme h der Demodulatorschaltung Demod bereitgestellten Logikpegels die an der Dateneingangsklemme DT2 eingespeisten Daten entweder zur Ansteuerung des Modulators bzw. des Modulatorstellgliedes Moda oder zur Ansteuerung des Modulators bzw. des Modulatorstellgliedes Modb vorgesehen sind.

Der in Figur 2 gezeigte Spannungsregler bzw. das gezeigte Spannungsreglerstellglied SRA ist in Abhängigkeit von dem an einer Eingangsklemme fa dieses Spannungsreglers bzw. Spannungsreglerstellgliedes anliegenden Logikpegel aktivierbar bzw. deaktivierbar. Ein solcher Spannungsregler SRA ist beispielsweise deaktivierbar, indem der Steuereingang seines Stellgliedes an ein festes Potential geschaltet wird und somit sicher gesperrt ist. Der Spannungsregler bzw. das Spannungsreglerstellglied SRB ist ebenfalls mit einer solchen, die Aktivierung bzw. Deaktivierung dieses Spannungsreglers SRB ermöglichenden Eingangsklemme fb ausgestattet. Die Eingangsklemme fa des Spannungsreglers SRA ist mit der Ausgangsklemme h der Demodulatorschaltung Demod verbunden, die Eingangsklemme fb des Spannungsreglers bzw. Spannungsreglerstellgliedes SRB ist mit dem Ausgang der Invertiererschaltung INV verbunden. Dadurch ist durch geeignete Wahl der Logikpegel sichergestellt, daß immer dann, wenn der Spannungsregler bzw. das Spannungsreglerstellglied SRA aktiviert ist, die Übertragung von Daten von dem beweglichen Teil BT zu dem stationären Teil ST über den Modulator Modb erfolgt und auch, daß immer dann, wenn der Spannungsregler SRB aktiviert ist, die Übertragung der Daten vom beweglichen Teil BT zum stationären Teil ST mit Hilfe der Modulatorschaltung bzw. des Modulatorstellgliedes Moda erfolgt.

Eine Schaltungsanordnung nach Figur 2 ermöglicht eine Energieübertragung vom stationären Teil ST zum beweglichen Teil BT sowie eine bidirektionale Datenübertragung zwischen diesen beiden Teilen einer erfindungsgemäßen Einrichtung unabhängig davon, ob, wie in Figur 2 dargestellt, die Übertragerspule L1a mit der Übertragerspule L2a einen Übertrager bildet und die Übertragerspule L1b mit der Übertragerspule L2b einen Übertrager bildet oder ob die Übertragerspule L1a mit der Übertragerspule L2b einen Übertrager bildet und die Übertragerspule L1b mit der Übertragerspule L2a den zweiten Übertrager bildet. Hierbei kann der Dateneingangsklemme DT2 eine Modulatorschaltung vorgeschaltet sein und die gezeigten Bauteile Moda und Modb beinhalten lediglich Modulatorstellglieder oder es können zwei Modulatorschaltungen Moda und Modb vorgesehen sein. Außerdem können die dargestellten Schaltungsteile SRA und SRB jeweils ein Spannungsreglerstellglied zeigen, dem ein gemeinsamer Spannungsregler vorgeschaltet ist, oder es können zwei autonome Spannungsregler SRA und SRB vorgesehen sein.

Eine einfach zu realisierende Ausführungsform besteht aus einem Spannungsregler, beispielsweise SRA mit einem zwischen der Eingangsklemme da und der Ausgangsklemme des Spannungsreglers geschalteten Stellglied und mit einem weiteren, zwischen die Eingangsklemme db und die Ausgangsklemme des Spannungsreglers geschalteten Stellglied. Hierbei muß sichergestellt sein, daß die Gleichrichterschaltung GRa bzw. GRb, über die momentan Daten von dem beweglichen Teil BT zum stationären Teil ST übertragen werden, an ihren Ausgangsklemmen a und c bzw. b und c eine maximale Spannung bereitstellt, die so klein ist, daß infolge des Spannungshubes der Amplitudenmodulation das nachgeschaltete Stellglied des Spannungsreglers zwar wirkungslos geschaltet ist, die Amplitudenmodulation jedoch nicht vom Spannungsregler ausgeregelt werden muß. Das ist dadurch realisierbar, daß die Modulatorschaltung Moda bzw. Modb, die auf die zur Datenübertragung vom beweglichen Teil BT zum stationären Teil ST benutzten Übertragerspulen wirkt, den Spannungspegel an den Ausgangsklemmen der ihr vorgeschalteten Gleichrichterschaltung GRa bzw. GRb nach oben derart begrenzt, daß die Eingangsspannung des ihr nachgeschalteten Spannungsreglerstellgliedes nur geringfügig größer ist als die Summe, gebildet aus der Ausgangsspannung der Spannungsreglerschaltung und der über die Spannungsreglerschaltung bzw. das Stellglied des Spannungsreglers abfallenden Mindestspannung.

Wenn die Modulatorschaltungen Moda und Modb so ausgelegt sind, daß sie zusätzlich zur steuerbaren Belastungsänderung auch zur Spannungsbegrenzung geeignet sind, ist es sinnvoll, wenn die momentan nicht zur Datenübertragung vom beweglichen Teil BT zum stationären Teil ST verwendete Modulatorschaltung Moda bzw. Modb die Eingangsspannung des ihr nachgeschalteten Spannungsreglerstellgliedes SRA bzw. SRB begrenzt. Begrenzt die Modulatorschaltung Moda bzw. Modb, mit deren Hilfe Daten vom beweglichen Teil BT zum stationären Teil ST übertragen werden die Spannung an dem ihr nachgeschalteten Spannungsreglerstellglied SRA bzw. SRB auf einen so kleinen Wert, daß dieses Spannungsreglerstellglied nicht das geforderte Ausgangspotential VSS bereitstellen kann, so wird dieses Ausgangspotential VSS der Spannungsregleranordnung nur durch das Stellglied des Spannungsreglers bereitgestellt, das der nicht an der Übertragung der Daten vom beweglichen Teil BT zum stationären Teil ST beteiligten Übertragerspule nachgeschaltet ist.

Wenn die zur Datenübertragung vom beweglichen Teil BT zum stationären Teil ST eingesetzte Modulatorschaltung den ihr vorgeschalteten Übertrager gering belastet und somit eine hohe, aber begrenzte Spannung an den Ausgangsklemmen der ihr vorgeschalteten Gleichrichterschaltung bereitsteht, die gerade ausreicht, daß das ihr nachgeschaltete Spannungsreglerstellglied das geforderte Ausgangspotential VSS bereitstellen kann, so wird dieses Ausgangspotential VSS der Spannungsregleranordnung von beiden Stellgliedern bereitgestellt und beide Übertragerspulen des beweglichen Teiles sind an der Energieübertragung vom stationären Teil ST zum beweglichen Teil BT beteiligt. Wenn aufgrund des Logikpegels der zu übertragenden Daten die Belastung des der Datenübertragung vom beweglichen Teil BT zum stationären Teil ST dienenden Übertragers durch die Modulatorschaltung größer ist, wird an der Eingangsklemme des dieser Modulatorschaltung nachgeschalteten Stellgliedes des Spannungsreglers ein Potential bereitgestellt, das kleiner ist als das Ausgangspotential der Spannungsregleranordnung. In diesem Fall wird das Ausgangspotential VSS der Spannungsregleranordnung nur von dem anderen Stellglied des Spannungsreglers bereitgestellt, das Spannungsreglerstellglied mit dem zu geringen Spannungspegel am Eingang ist in diesem Fall für die Energieübertragung wirkungslos.

Bei einer solchen Ausführungsform der Spannungsregleranordnung, bestehend aus einem Spannungsregler mit zwei Stellgliedern, wobei mindestens die Eingangsspannung eines Stellgliedes begrenzt ist, ist es nicht erforderlich, daß die Stellglieder der Spannungsregleranordnung in Abhängigkeit von der Zuordnung der Übertragerspulen aktiviert bzw. deaktiviert werden.

Wenn beispielsweise der Spannungsregler eine Ausgangsspannung VSS von 5 V bereitstellen soll und als Spannungsregler ein üblicher Serienregler eingesetzt ist, sollte der durch die Modulatorschaltung eingestellte High-Pegel am Eingang des Spannungsreglerstellgliedes 6,5 V nicht überschreiten. Der zugehörige Low-Pegel kann ca. 4 V betragen, ist jedoch nicht kritisch.

Die in Figur 2 gezeigten Modulatorschaltungen Moda und Modb können, wie auch die gezeigten Spannungsreglerschaltungen SRA und SRB jeweils mit einem Referenzspannungseingang REF ausgestattet sein, der mit dem Ausgangssignal einer Referenzspannungserzeugung, beispielsweise einer Band-Gap-Schaltung BG beaufschlagt wird.

In Figur 2 wird eine mögliche Realisierungsform einer erfindungsgemäßen Einrichtung zur berührungslosen Daten- und Energieübertragung gezeigt, bei der im beweglichen Teil in Abhängigkeit davon, welche der beiden Übertragerspulen des beweglichen Teiles die Bezugsschwingung und welche die Informationsschwingung empfängt, der einer dieser beiden Übertragerspulen nachgeschaltete Spannungsregler SRA bzw. SRB aktiviert wird und die der anderen Übertragerspule nachgeschaltete Modulatorschaltung Modb bzw. Moda von den vom beweglichen Teil BT zum stationären Teil ST zu übertragenden Daten angesteuert wird. Diese Schaltungsart hat den Vorteil, daß die Grenzfrequenz der erforderlichen Umschaltereinrichtung US nur durch die maximal zulässige Übertragungsrate der an der Dateneingangsklemme DT2 eingespeisten Daten festgelegt wird. Der gleiche technische Effekt, der mit einer Schaltungsanordnung nach Figur 2 erzielt wird, ist auch mit einer Schaltungsanordnung nach Figur 1 erzielbar, wenn zusätzlich eine Umschalteeinrichtung vorgesehen ist, die die Ausgangsklemme a der Gleichrichteranordnung GRa an die Eingangsklemme d des Spannungsreglers SR schaltet und die Ausgangsklemme b der Gleichrichteranordnung GRb an die Eingangsklemme e der Modulatorschaltung Mod schaltet, falls die Übertragerspule L2a die Bezugsschwingung empfängt und die Übertragerspule L2b die Informationsschwingung empfängt und die dann, wenn die Übertragerspule L2a die Informationsschwingung empfängt die Ausgangsklemme a an die Eingangsklemme e schaltet und die Ausgangsklemme b an die Eingangsklemme d schaltet. Die Grenzfrequenz einer hierzu erforderlichen, in den Figuren nicht gezeigten Umschalteeinrichtung wird jedoch durch die Trägerfrequenz, also durch die Signalfrequenz des Oszillators OSC im stationären Teil ST festgelegt und liegt somit üblicherweise oberhalb der Grenzfrequenz einer Umschalteeinrichtung US nach Figur 2.

Erfindungsgemäße Einrichtungen zur berührungslosen Daten- und Energieübertragung können sowohl in Zugangssystemen als auch in Datenaustauschsystemen verwendet werden. Zugangssysteme sind in diesem Zusammenhang Systeme, die den Inhaber des beweglichen Teiles BT einer erfindungsgemäßen Einrichtung zur berührungslosen Daten- und Energieübertragung als zugangsberechtigt erkennen und ihm den Zugang entweder zu Daten oder zu Räumlichkeiten oder die Benutzung irgendwelcher Einrichtungen ermöglichen.

Datenaustauschsysteme sind in diesem Zusammenhang Systeme, bei denen sowohl an den stationären Teil ST als auch an den beweglichen Teil BT der Einrichtung zur berühungslosen Daten- und Energieübertragung ein Datenträger angeschlossen ist und mindestens an den stationären Teil ST eine Datenverarbeitungseinheit angeschlossen ist.

Der bewegliche Teil BT kann in Form eines Schlüssels ausgeführt sein. In Zugangssystemen ist dann der stationäre Teil in Form eines Schlosses ausgeführt. In Datenaustauschsystemen ist der stationäre Teil in Form eines Lese- und Schreibgerätes, evtl. gekoppelt an eine Datenverarbeitungseinheit ausgeführt.

Der bewegliche Teil einer erfindungsgemäßen Einrichtung zur berührungslosen Daten- und Energieübertragung kann außerdem in Form einer Chipkarte ausgebildet sein. In diesem Falle ist der stationäre Teil Teil eines Lesegerätes bzw. eines Schreib- und Lesegerätes.

## Patentansprüche

1. Einrichtung zur berührungslosen Daten- und Energieübertragung
mit einem stationären Teil (ST),
- mit einem Oszillator (OSZ), dessen erster Ausgang (sinwt) eine erste Spule (L1a) mit einem Bezugssignal und dessen zweiter Ausgang (coswt) über einen Phasenmodulator (EXOR) eine zweite Spule (L1b) mit einem phasenmodulierten Signal ansteuert und
- mit einer von der zweiter Spule (L1b) ansteuerbaren Auswerteschaltung (AS),
und mit einem beweglichen Teil (BT),
- mit einer dritten Spule (L2a) und einer dieser nachgeschalteten ersten Gleichrichterschaltung (GRa),
- mit einer vierten Spule (L2b) und einer dieser nachgeschalteten zweiten Gleichrichterschaltung (GRb),
- wobei die Spulen (L1a, L1b) des stationären Teils (ST) den Spulen (L2a, L2b) des beweglichen Teils (BT) zur Bildung von Spulenpaaren beliebig zuordenbar sind,
- mit einem Demodulator (Demod), der von der dritten und der vierten Spule (L2a, L2b) angesteuert wird und an einem Steuerausgang (h) ein Ausgangssignal erzeugt, dessen Zustand davon abhängt, welche der Spulen (L2a, L2b) das phasenmodulierte Signal und welche das Bezugssignal empfängt,
- mit zumindest einem Modulator (Moda; Modb), der abhängig vom Zustand des Ausgangssignals des Demodulators (Demod) einer der Spulen (L2a; L2b) zuordenbar ist,
- mit zumindest einem Spannungsregler (SRA; SRB), der abhängig vom Zustand des Ausgangssignals des Demodulators (Demod) der jeweils anderen Spule (L2b; L2a) zuordenbar ist,
- und mit einem Umschalter (US, INV), der von dem Demodulator (Demod) derart ansteuerbar ist, daß er abhängig vom Zustand des Ausgangssignals des Demodulators (Demod) den Modulator (Moda; Modb) der einen der beiden Spulen (L2a; L2b) und den Spannungsregler (SRB; SRA) der jeweils anderen der beiden Spulen (L2b; L2a) zuordnet.

2. Einrichtung nach Anspruch 1, dadurch gekennzeichnet, daß im Falle von einem ersten und einem zweiten Modulator (Moda, Modb) und einem ersten und einem zweiten Spannungsregler (SRA, SRB) der Umschalter (US, INV) abhängig vom Zustand des Ausgangssignals des Demodulators (Demod) entweder den ersten Modulator (Moda) der dritten Spule (L2a) und den zweiten Spannungssregler (SRB) der vierten Spule (L2b) oder den zweiten Modulator (Modb) der vierten Spule (L2b) und den ersten Spannungsregler (SRA) der dritten Spule (L2a) zuordnet.

3. Verwendung einer Einrichtung zur berührungslosen Daten- und Energieübertragung nach einem der vorhergehenden Ansprüche in einem Datenaustauschsystem,
**dadurch gekennzeichnet**,
daß der bewegliche Teil (BT) Teil eines Schlüssels ist.

4. Verwendung einer Einrichtung zur berührungslosen Daten- und Energieübertragung nach einem der Ansprüche 1 oder 2 in einem Datenaustauschsystem,
**dadurch gekennzeichneit**,
daß der bewegliche Teil (BT) Teil einer Chipkarte ist.

5. Verwendung einer Einrichtung zur berührungslosen Daten- und Energieübertragung nach einem der Ansprüche 1 oder 2 in einem Zugriffssystem,
**dadurch gekennzeichnet**,
daß der bewegliche Teil (BT) Teil eines Schlüssels ist.

6. Verwendung einer Einrichtung zur berührungslosen Daten- und Energieübertragung nach einem der Ansprüche 1 oder 2 in einem Zugriffssystem,
**dadurch gekennzeichnet**,
daß der bewegliche Teil (BT) Teil einer Chipkarte ist.

## Claims

1. Device for contactless data and energy transmission
having a stationary part (ST),
- having an oscillator (OSZ) whose first output (sinwt) drives a first coil (L1a) with a reference signal and whose second output (coswt) drives a second coil (L1b) with a phase-modulated signal via a phase modulator (EXOR) and
- having an evaluator circuit (AS) that can be driven by the second coil (1b),
and having a movable part (BT),
- having a third coil (L2a) and a first rectifier circuit (GRa) connected downstream of the latter,
- having a fourth coil (L2b) and a second rectifier circuit (GRb) connected downstream of the latter,
- it being possible to assign the coils (L1a, L1b) of the stationary part (ST) to the coils (L2a, L2b) of the movable part (BT) in any desired way to form coil pairs,
- having a demodulator (Demod), which is driven by the third coil and the fourth coil (L2a, L2b) and produces at a control output (h) an output signal whose state depends on which of the coils (L2a, L2b) receives the phase-modulated signal and which receives the reference signal,
- having at least one modulator (Moda; Modb), which can be assigned to one of the coils (L2a; L2b) as a function of the state of the output signal of the demodulator (Demod),
- having at least one voltage regulator (SRA; SRB), which can be assigned to the other coil (L2b; L2a) in each case, as a function of the state of the output signal of the demodulator (Demod),
- and having a reversing switch (US, INV), which can be driven by the demodulator (Demod) in such a way that, as a function of the state of the output signal of the demodulator (Demod), it assigns the modulator (Moda; Modb) to one of the two coils (L2a; L2b) and assigns the voltage regulator (SRB; SRA) to the other of the two coils (L2b; L2a) in each case.

2. Device according to Claim 1, characterized in that, in the case of a first modulator and a second modulator (Moda, Modb) and of a first voltage regulator and a second voltage regulator (SRA, SRB), the reversing switch (US, INV) either assigns the first modulator (Moda) to the third coil (L2a) and the second voltage regulator (SRB) to the fourth coil (L2b), or assigns the second modulator (Modb) to the fourth coil (L2b) and the first voltage regulator (SRA) to the third coil (L2a), as a function of the state of the output signal of the demodulator (Demod).

3. Use of a device for contactless data and energy transmission according to one of the preceding claims, in a data exchange system, characterized in that the movable part (BT) is part of a key.

4. Use of a device for contactless data and energy transmission according to one of Claims 1 or 2, in a data exchange system, characterized in that the movable part (BT) is part of a chip card.

5. Use of a device for contactless data and energy transmission according to one of Claims 1 or 2, in an access system, characterized in that the movable part (BT) is part of a key.

6. Use of a device for contactless data and energy transmission according to one of Claims 1 or 2, in an access system, characterized in that the movable part (BT) is part of a chip card.

## Revendications

1. Dispositif de transmission sans contact de données et d'énergie, comportant une partie immobile (ST) ayant
- un oscillateur (OSZ), dont la première sortie (sinwt) commande une première bobine (L1a) par un signal de référence et dont la seconde sortie (coswt) commande, par l'intermédiaire d'un modulateur (EXOR) de phase, une seconde bobine (L1b) par un signal modulé en phase et
- un circuit (AS) d'exploitation pouvant être commandé par la seconde bobine (L1b),
et une partie mobile (BT) ayant
- une troisième bobine (L2a) et un premier circuit (GRa) redresseur branché en aval de cette bobine,
- une quatrième bobine (L2b) et un second circuit (GRb) redresseur branché en aval de cette bobine,
- les bobines (L1a, L1b) de la partie immobile (ST) pouvant être associées de manière quelconque aux bobines (L2a, L2b) de la partie mobile (BT) pour former des paires de bobines,
- un démodulateur (Demod), qui est commandé par la troisième et par la quatrième bobine (L2a, L2b) et qui produit à une sortie (h) de commande un signal de sortie dont l'état dépend de celle des bobines (L2a, L2b) qui reçoit le signal modulé en phase et de celle qui reçoit le signal de référence,
- au moins un modulateur (Moda; Modb), qui peut être associé, en fonction de l'état du signal de sortie du démodulateur (Demod) à l'une des bobines (L2a; L2b),
- au moins un régulateur (SRA; SRB) de tension, qui peut être associé, en fonction de l'état du signal de sortie des démodulateurs (Demod) à l'autre bobine (L2b; L2a),
- et un commutateur (US, INV), qui peut être commandé par le démodulateur (Demod) de sorte à associer, en fonction de l'état du signal de sortie du démodulateur (Demod), le modulateur (Moda; Modb) à l'une des deux bobines (L2a; L2b) et le régulateur (SRB; SRA) de tension à l'autre des deux bobines (L2b; L2a).

2. Dispositif suivant la revendication 1, caractérisé en ce que dans le cas où le dispositif comporte des premier et second modulateurs (Moda, Modb) et des premier et second régulateurs (SRA, SRB) de tension, les commutateurs (US, INV) associent, en fonction de l'état du signal de sortie du démodulateur (Demod), soit le premier modulateur (Moda) à la troisième bobine (L2a) et le second régulateur (SRB) de tension à la quatrième bobine (L2b), soit le second modulateur (Modb) à la quatrième bobine (L2b) et le premier modulateur (SRA) de tension à la troisième bobine (L2a).

3. Utilisation d'un dispositif de transmission sans contact de données et d'énergie suivant l'une des revendications précédentes dans un système d'échange de données,
caractérisée en ce que
la partie mobile (BT) fait partie d'une clé.

4. Utilisation d'un dispositif de transmission sans contact de données et d'énergie suivant l'une des revendications 1 et 2 dans un système d'échange de données,
caractérisée en ce que
la partie mobile (BT) fait partie d'une carte à puce.

5. Utilisation d'un dispositif de transmission sans contact de données et d'énergie suivant l'une des revendications 1 et 2 dans un système d'accès,
caractérisée en ce que
la partie mobile (BT) fait partie d'une clé.

6. Utilisation d'un dispositif de transmission sans contact de données et d'énergie suivant l'une des revendications 1 et 2 dans un système d'accès, caractérisée en ce que la partie mobile (BT) fait partie d'une carte à puce.
